# EUROPEAN PATENT SPECIFICATION

(11) **EP 0 685 665 B1**
(45) Date of publication and mention of the grant of the patent: **18.10.2000**
(21) Application number: 95108447.4
(22) Date of filing: 01.06.1995
(51) Int. Cl.: F16H 61/04

(54) **Control system for automatic transmission**
Steuerungssystem für Automatikgetriebe
Système de commande pour transmission automatique

(30) Priority: 02.06.1994 JP 14220394; 27.09.1994 JP 25611694
(43) Date of publication of application: 06.12.1995
(73) Proprietor: AISIN AW CO., LTD., Anjo-shi Aichi-ken 444-11 (JP); TOYOTA JIDOSHA KABUSHIKI KAISHA, Aichi-ken 471-8571 (JP)
(72) Inventor: Tsukamoto, Kazumasa, Aisin AW CO., Ltd., Anjo-shi, Aichi-ken 444-11 (JP); Ando, Masahiko, Aisin AW CO., Ltd., Anjo-shi, Aichi-ken 444-11 (JP); Hayabuchi, Masahiro, Aisin AW CO., Ltd., Anjo-shi, Aichi-ken 444-11 (JP); Fukatsu, Akira, Aisin AW CO., Ltd., Anjo-shi, Aichi-ken 444-11 (JP); Kaigawa, Masato, c/o Toyota Jidoshi K.K., Toyota-shi, Aichi-ken 471 (JP); Fukumura, Kagenori, c/o Toyota Jidoshi K.K., Toyota-shi, Aichi-ken 471 (JP); Oba, Hidehiro, c/o Toyota Jidoshi K.K., Toyota-shi, Aichi-ken 471 (JP); Hojo, Yasuo, c/o Toyota Jidoshi K.K., Toyota-shi, Aichi-ken 471 (JP); Kimura, Hiromichi, c/o Toyota Jidoshi K.K., Toyota-shi, Aichi-ken 471 (JP); Tabata, Atsushi, c/o Toyota Jidoshi K.K., Toyota-shi, Aichi-ken 471 (JP)
(74) Representative: VOSSIUS & PARTNER

(56) References cited:
- EP-A- 0 545 385
- GB-A- 2 278 654
- US-A- 5 203 234

## Description

The present invention relates to a control system for an automatic transmission and, more particularly, to a control system for switching the gripping actions of frictional engagement elements in a transmission mechanism so as to effect an automatic speed change.

In the prior art, an automatic transmission is required, depending upon the gear train construction, to effect a so-called "grip-changing operation" in which the application of one of two frictional engagement elements (e.g., brakes or clutches) and the release of the other are simultaneously performed at a time of shifting between two specific gear stages. In this case, one-way clutches are usually arranged in parallel with the individual frictional engagement elements to optimize the applying/releasing timings thereby to avoid a drop of the output shaft torque due to tie-up and engine racing due to under-lap. In order to make the transmission mechanism compact, however, there may be adopted a construction in which the one-way clutch is omitted. In this case, oil pressure feeding/releasing oil passages for the two frictional engagement elements have to be arranged with dedicated valves for controlling the release of the oil pressure from one frictional engagement element and the oil pressure feed to the other in a related manner. The control system thus constructed is exemplified in the prior art by the technique, as disclosed in Japanese Patent Laid-Open No. JP-A-5157168 (& EP 545385) In this disclosure, there is arranged a valve (i.e., 2-3 timing valve) for controlling the oil pressure (as will be called the "releasing pressure") of the frictional engagement element (which may be a brake B-3 in the embodiments of the present invention, as will be likewise exemplified by a parenthesized component of the embodiments) at the side to be released at a time of shifting from a 2nd speed to a 3rd speed (as will be likewise abbreviated by 2nd → 3rd as in other shifts).

In the prior art described above, there is provided an accumulator for compensating an over-drop of the releasing pressure. However, this accumulator occupies a large space in the entirety of the hydraulic control system because it has a capacity for accumulating a large amount of oil so that it undesirably obstructs the compact construction of the hydraulic control system. In our preceding Japanese Patent Application 157986/1993 (& GB-A-2278654 published 7.12.94), therefore, we have proposed a hydraulic control system in which the releasing pressure at the grip-change shifting time (from the 2nd → 3rd speeds) is controlled exclusively by a control valve without using the accumulator. According to this proposal, by the control valve for regulating the pressure by exemplifying an original pressure by the releasing pressure of the frictional engagement element (i.e., the brake B-3) engaging at the 2nd speed of the 2nd → 3rd shifting time and the D-range pressure to be fed to the frictional engagement element (i.e., the brake B-2) to engage at the 3rd speed and by exemplifying a signal oil pressure by the pressure fed to the engaging side frictional engagement element (i.e., the brake B-2), the releasing pressure of the released side frictional engagement element (i.e., the brake B-3) is reduced according to the rise (as will be called the "applying pressure") of the oil pressure as a result of the feed of the oil pressure to the engaging side frictional engagement element (i.e., the brake B-2). According to this construction, however, at the start at a higher gear stage on a low µ road suppressing the drive torque at the start of the vehicle, that is, at the start at a 3rd speed on a snowy road, the applying pressure is raised by the D-range pressure to be fed to the engaging side frictional engagement element (i.e., the brake B-2) and is fed to the control valve till this valve is closed, so that useless pressure regulations are performed. This causes a problem that the flow loss of the oil is increased to delay the rise of the applying pressure.

Therefore, the present invention has a main object to prevent any delay in the application of a frictional engagement element at the start of a higher gear stage in a control system for an automatic transmission for controlling the applying pressure with the releasing pressure by the control valve at the grip-changing operation.

An accompanying object of the present invention is to prevent a transient drop of the applying pressure at the grip-changing operation in the aforementioned control system.

In order to solve the above-specified problems, according to a feature of the present invention, in an automatic transmission for establishing: a first gear stage with both its first frictional engagement element and second frictional engagement element being released; a second gear stage with its first frictional engagement element being applied and its second frictional engagement element being released; and a third gear stage with its first frictional engagement element being released and its second frictional engagement element being applied, there is provided a control system comprising: a first oil passage for feeding an oil pressure to said first frictional engagement element; a second oil passage for feeding an oil pressure to said second frictional engagement element; change-over means for feeding an oil pressure selectively to said first and second oil passages; and a first valve arranged in said first oil passage for regulating the oil pressure of said first oil passage in accordance with the applied state of said second frictional engagement element, wherein the oil pressure is fed to said first oil passage and said second oil passage through said change-over means at a shifting time from said first gear stage to said third gear stage, and wherein the release of the oil pressure from said first frictional engagement element is regulated according to the feed of the oil pressure to said second frictional engagement element at a shifting time from said second gear stage to said third gear stage. The control system is characterized in that a second valve is arranged upstream of the oil passage of said first valve for interrupting the feed of the oil pressure of said first oil passage to said first valve to interrupt the feed of said oil pressure to said first valve at the shifting time from said first gear stage to said third gear stage.

According to a second feature of the present invention, moreover, said change-over means can include: a third valve for switching the feed of the oil pressure from said first oil passage to said second oil passage at the shifting time from said second gear stage to said third gear stage; and a fourth valve adapted to be held in a predetermined position at the shifting time from said second gear stage to said third gear stage, and wherein said first oil passage is connected to said fourth valve while bypassing said third valve.

In the present invention thus constructed, there is arranged upstream of the oil passage of the first valve a second valve for switching the feed/interruption of the oil pressure to the first valve at a shifting time from the 1st gear stage to the 3rd gear stage. At the start at the 3rd gear stage, the oil pressure to be fed to the first oil passage is not uselessly regulated by the first valve because its feed to the first valve is interrupted by the second valve, so that the flow loss is eliminated. According to the present invention, therefore, the delay of application of the second frictional engagement element can be prevented at the shifting time from the 1st gear stage to the 3rd gear stage.

If the control system were be constructed to feed the oil pressure to the first oil passage through the third valve, no oil pressure would be fed to the first oil passage at the 2nd gear stage. Then, at the shifting time from the 2nd gear stage to the 3rd stage, the applying pressure of the first frictional engagement element would drop until the feed of the oil pressure to the first oil passage is caused by the switching action of the third valve. According to the construction of the second feature, however, the oil pressure has already been fed to the first oil passage at the 2nd gear stage while bypassing the third valve, so that the applying pressure of the first frictional engagement element can be prevented from transiently dropping at the shifting time from the 2nd gear stage to the 3rd gear stage. Thanks to this construction, therefore, it is possible to reduce the shifting shock of the automatic transmission.
Fig. 1 is a circuit diagram of a portion of a hydraulic control system for an automatic transmission according to a first embodiment of the present invention;
Fig. 2 is a skeleton diagram showing a transmission mechanism portion of the automatic transmission;
Fig. 3 is an operation chart of the automatic transmission;
Fig. 4 is a block diagram showing a system construction of the automatic transmission;
Fig. 5 is a control flow chart of the control system of the automatic transmission at individual shifting times;
Fig. 6 is a circuit diagram of a portion showing the connected states of oil passages of the hydraulic control system at a 1st → 2nd shifting time;
Fig. 7 is a time chart of the automatic transmission at the 1st → 2nd shifting time;
Fig. 8 is a time chart of the automatic transmission at a 2nd → 1st shifting time;
Fig. 9 is a time chart of the automatic transmission at a 2nd → 3rd shifting time;
Fig. 10 is a time chart of the automatic transmission at a 3rd → 2nd shifting time;
Fig. 11 is a circuit diagram showing a portion of another embodiment of the hydraulic control system having the control valve built therein;
Fig. 12 is a circuit diagram showing a portion of another embodiment in which a passage for applying an external signal pressure to the control valve is changed; and
Fig. 13 is a circuit diagram showing a portion of another embodiment in which a connection mode of a relay valve is changed.

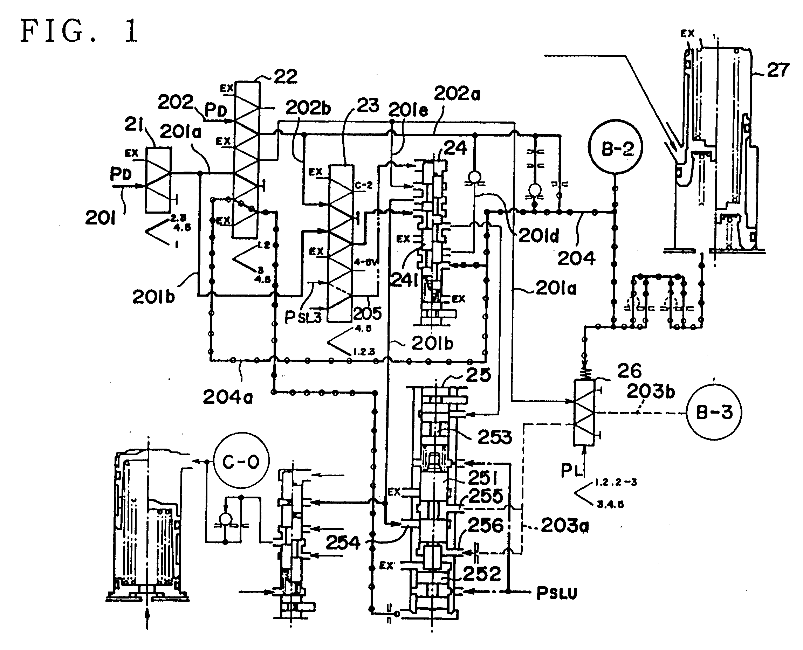

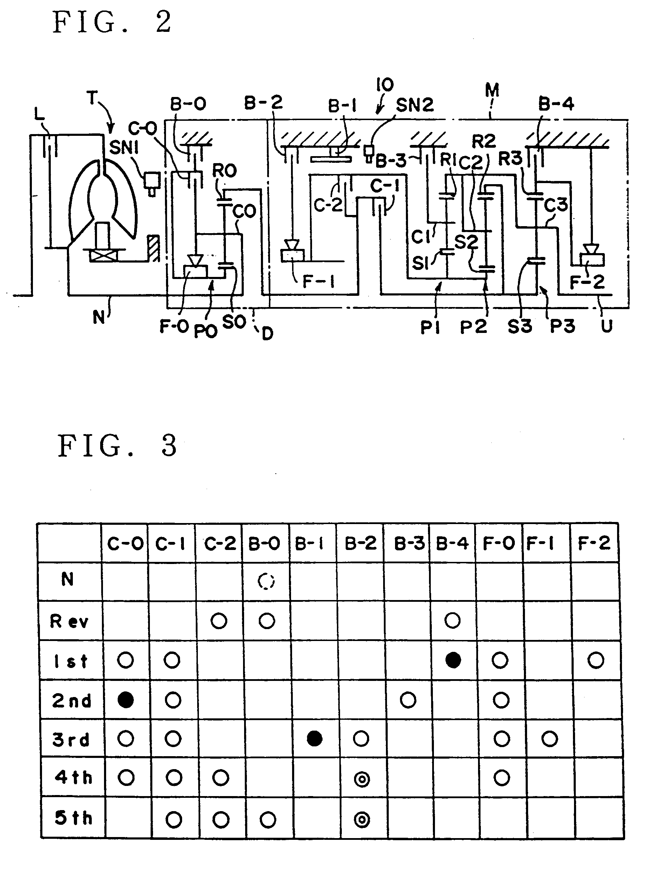

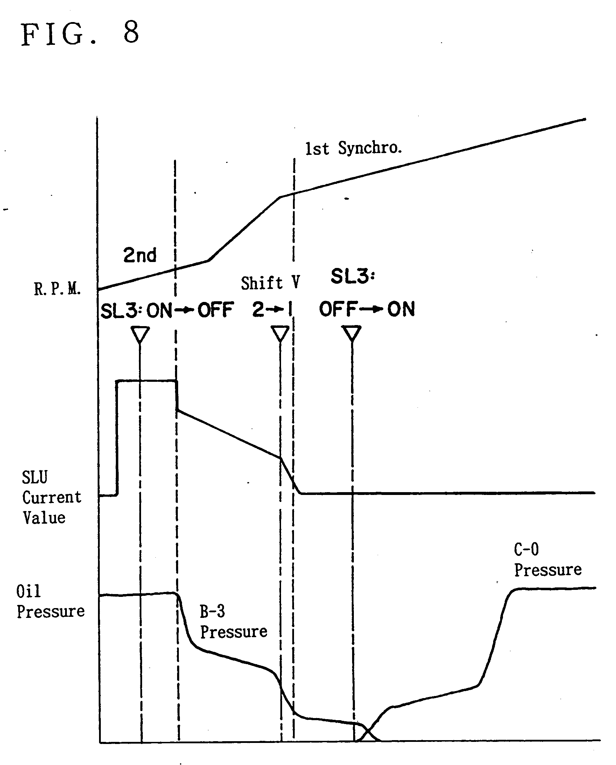

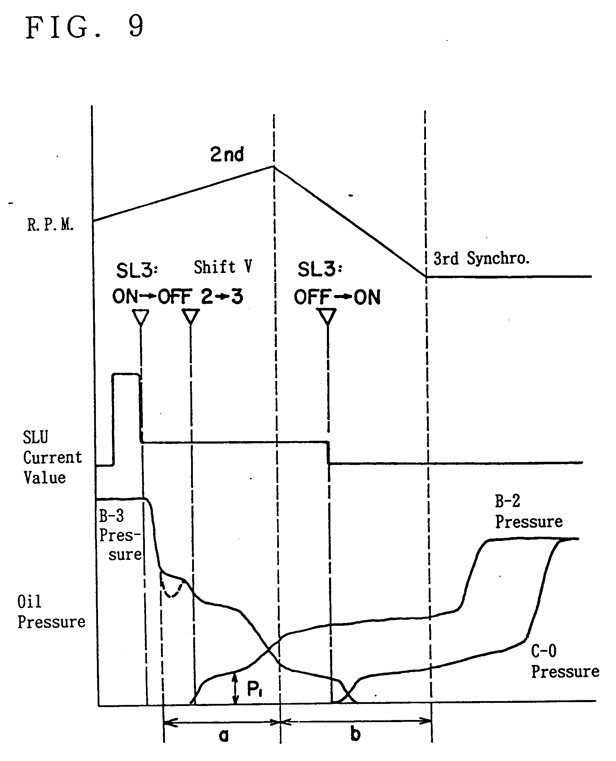

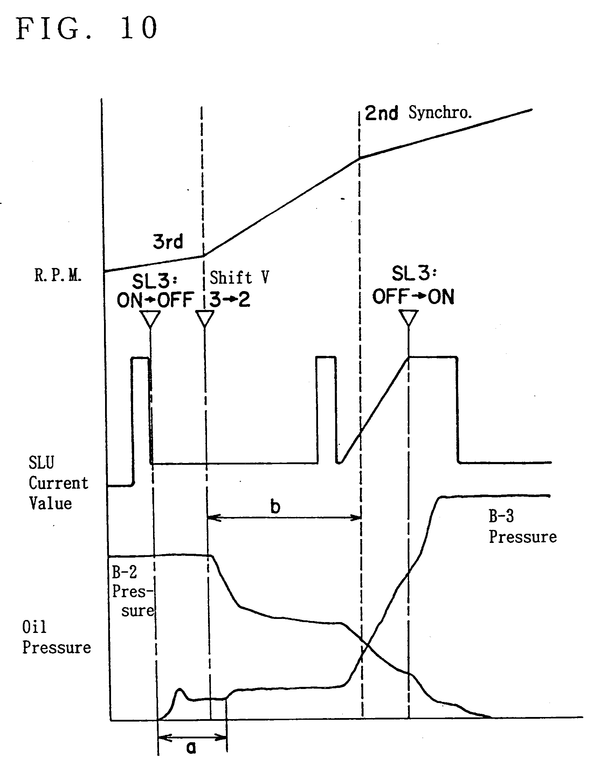

The present invention will be described in the following in connection with its embodiments with reference to the accompanying drawings. Figs. 1 to 10 shows a first embodiment of the present invention. Here will be described at first the schematic construction of the entirety of an automatic transmission. As shown in Fig. 2, an automatic transmission 10 has its mechanical portion constructed, in this embodiment, to have five speeds by combining an auxiliary transmission mechanism D composed of a pre-overdrive planetary gear unit and a main transmission mechanism M composed of a simply connected 3-planetary gear trains to establish four forward speeds and one reverse. The mechanical portion thus constructed is connected to a torque converter T having a lockup clutch L.

The auxiliary transmission mechanism D is equipped with: a one-way clutch F-0 in association with a sun gear S0, a carrier C0 and a ring gear R0; a multidisc clutch C-0 in parallel with the one-way clutch F-0; and a multi-disc brake B-0 in series with the multi -disc clutch C-0. On the other hand, the main transmission mechanism M is equipped with three sets of simply connected gear units P1 to P3 in which are suitably directly connected the individual transmission elements composed of sun gears S1 to S3, carriers C1 to C3 and ring gears R1 to R3. The main transmission mechanism M is arranged with multi-disc clutches C-1 and C-2, a band brake B-1, multi-disc brakes B-2 to B-4, and one-way clutches F-1 and F-2 in association with the transmission elements of the individual gear units. Incidentally, in Fig. 2, reference characters SN1 designate a C0 sensor for detecting the drum rotation of the clutch C-0, and characters SN2 designate a C2 sensor for detecting the drum rotation of the clutch C-2. Moreover, the individual clutches and brakes are equipped with hydraulic servo units composed of piston-cylinder mechanisms for applying/releasing their friction members, although not shown.

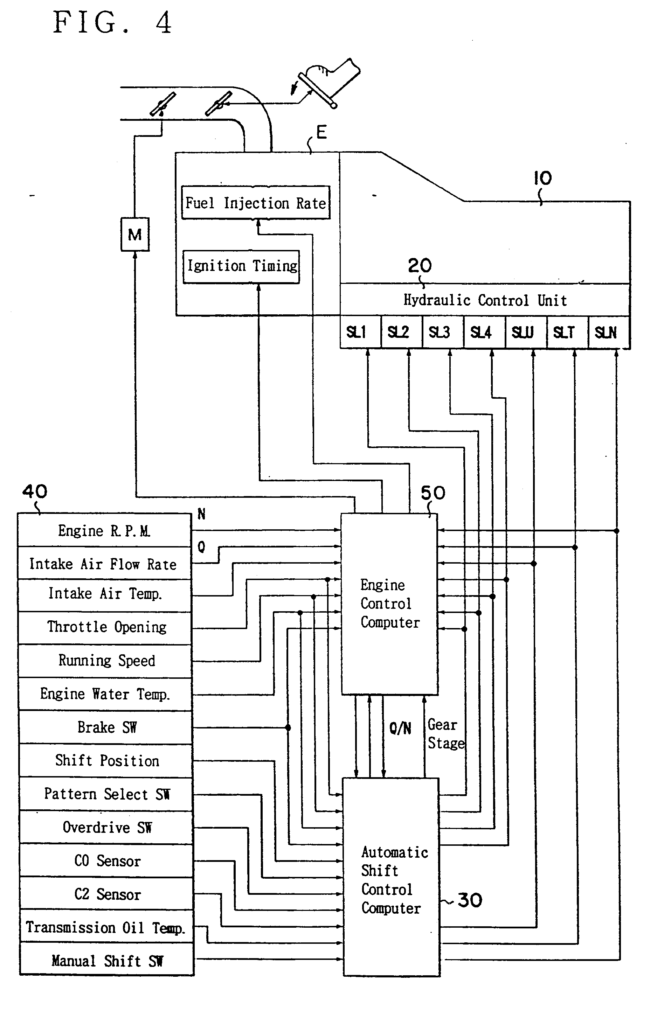

As shown in Fig. 4, the automatic transmission 10 is equipped with: a hydraulic control system 20 for controlling the mechanical portion having the aforementioned construction, the torque converter and the lockup clutch; and the not-shown oil pump which is built in the mechanical portion as the oil pressure source for the hydraulic control system 20. The automatic transmission 10 is connected, when mounted on the vehicle, to an engine E and has its hydraulic control system 20 connected with an automatic transmission control computer 30 through individual solenoid valves SL1 to SL4 and individual linear solenoid valves SLN, SLT and STU, which are built in the hydraulic control system 20. The automatic transmission control computer 30 is connected with: a variety of sensors 40, which are arranged in the individual portions of the vehicle including the engine E and the automatic transmission 10; and an engine control computer 50.

In this automatic transmission 10, the rotation of the engine E shown in Fig. 4 is transmitted to the input shaft N of the auxiliary transmission mechanism D through the torque converter T shown in Fig. 2, to rotate the carrier C0 connected to the input shaft N at all times. This rotation of the carrier C0 is interrupted from an output shaft U to establish a neutral state, with all the frictional engagement elements being released or only the brake B-0 being applied under the control of the aforementioned hydraulic control system. In this embodiment, the neutral state corresponds to the 1st gear stage of the present invention.

Moreover, the 1st-speed rotation is inputted to the sun gear S3 of the gear unit P3 through the ring gear R0 and the clutch C-1, with the clutch C-0 being applied to directly connect the auxiliary transmission mechanism D, with the clutch C-1 of the main transmission mechanism M being applied, and with all the remaining frictional engagement elements being released, and is outputted as the 1st-speed rotation to the output shaft U from the carrier C3 by obstructing the backward rotation of the ring gear R3 by the one-way clutch F-2.

Next, the rotation at a 2nd-speed, i.e., the 2nd gear stage, as specified in this embodiment of the present invention, is established when the auxiliary transmission mechanism D is directly connected so that the clutch C-1 and the brake B-3 corresponding to the first frictional engagement element, as specified in the present invention, are applied. At this time, the input having entered the ring gear R2 of the gear unit P2 via a passage like that of the case of the 1st speed is outputted, by using the carrier C1 of the gear unit P1 as a reaction element, to the carrier C2 of the gear unit P2 and the ring gear R1 of the gear unit P1, as directly connected to the former, so that it establishes the 2nd-speed rotation of the output shaft U.

On the other hand, the rotation at a 3rd-speed, i.e., the 3rd gear stage, as specified in this embodiment of the present invention, is established, too, when the auxiliary transmission mechanism D is directly connected to apply the clutch C-1 and the brake B-2 corresponding to the second frictional engagement element, as specified in the present invention, while releasing the others. At this time, the input having entered the ring gear R2 of the gear unit P2 via a passage like that of the case of the 2nd speed is outputted to the carrier C2 by using the sun gear S2 as a reaction element so that it establishes the 3rd-speed rotation of the output shaft U.

Moreover, a 4th-speed rotation is established, too, when the auxiliary transmission mechanism D is directly connected to apply bath the clutch C-1 and the clutch C-2. At this time, the input rotation is inputted to the ring gear R2 and the sun gear S2 so that the gear unit P2 is directly connected to output the input rotation as it is. On the other hand, a 5th-speed rotation is established, when the main transmission mechanism M is in the state of the aforementioned 4th-speed rotation and in the overdrive state, in which the clutch C-0 is released and the brake B-0 is applied to fix the sun gear S0 thereby to accelerate the auxiliary transmission mechanism D.

On the other hand, the reverse is established, when the auxiliary transmission mechanism D is in the aforementioned state, by applying the clutch C-2 and the brake B-4 of the main transmission mechanism M. At this time, the input having entered the sun gear S2 of the gear unit P2 is outputted as the backward rotations of the carriers C2 and C3 of the gear units P2 and P3 using the ring gear R3 as a reaction element.

The applied/released relations of the individual frictional engagement elements and the one-way clutches at the aforementioned individual gear stages are tabulated in the operation chart of Fig. 3. In Fig. 3: blank circles ○ designate the application for the clutches and brakes and the lock for the one-way clutches; solid circles ● designate the application only at the engine braking time; a broken circle ○ designates the application or release; and double circles ⓞ designate the application withdrawing the participation in the power transmission.

In the automatic transmission 10 thus constructed, the circuit portions for directly participating in the regulations and the feed/release of the oil pressure of the hydraulic servo units to apply/release the individual frictional members of the brake B-3 corresponding to the first frictional engagement element of the present invention and brake B-2 corresponding to the second frictional engagement element are arranged, as shown in Fig. 1, with a 1-2 shift valve 21, a 2-3 shift valve 22, a 3-4 shift valve 23, a B-2 release valve 24, a B-3 control valve 25, a relay valve 26 and a B-2 accumulator 27. These hydraulic components are controlled by the solenoid valves SL1 to SL4, as shown in Fig. 4, for switching the individual shift valves, a lockup linear solenoid valve SLU, the accumulator control linear solenoid valve SLN for controlling the B-2 accumulator 27 and its back pressure, the linear solenoid valve SLT for outputting a control signal according to the engine load to the linear solenoid valve SLU, and so on.

This circuit portion is provided with: a first oil passage 201b for feeding the oil pressure to the brake B-3; a second oil passage 202a for feeding the oil pressure to the brake B-2; the 1-2 shift valve 21 and the 2-3 shift valve 22 constituting change-over means for feeding the oil pressure selectively to the first and second oil passages; and the B-3 control valve 25 arranged in the first oil passage 201b and constituting a first valve for regulating the oil pressure of the first oil passage 201b in accordance with the engaging state of the brake B-2. Moreover, this circuit constitutes the control system for feeding the oil pressure to the first oil passage 201b and the second oil passage 202a through the 1-2 shift valve 21 and the 2-3 shift valve 22 at the shifting time from the 1st gear stage (i.e., the neutral N in this embodiment) to the 3rd gear stage (i.e., the 3rd speed (or 3rd)) and for regulating the release of the oil pressure from the brake B-3 by the B-3 control valve 25 in accordance with the applying oil pressure to the brake B-2 at the shifting time from the 2nd gear stage (i.e., the 2nd speed (or 2nd)) to the 3rd gear stage (i.e., the 3rd speed (or 3rd)). According to the gist of the present invention, moreover, there is arranged upstream of the oil passage of the B-3 control valve 25 the B-2 release valve 24 which constitutes the second valve for switching the feed/interruption of the oil pressure to the B-3 control valve 25 of the first oil passage 201b. This B-2 release valve 24 interrupts the feed of the oil pressure to the B-3 control valve 25 via the oil passage 201b at the shifting time from the neutral (N) to the 3rd speed (or 3rd).

Especially, the control valve 25, as arranged in the feeding/releasing oil passage of the oil pressure for the brake B-3, is constructed of: a spool 251 adapted to be fed with the fed-back oil pressure of the brake B-3 in a valve closing direction (i.e., upward of the drawing) from an oil passage 203a and with an external control signal oil pressure (i.e., the signal pressure outputted from the linear solenoid valve SLU) P_{SLU} in an opposite valve opening direction (i.e., downward of the drawing), to regulate the oil pressure of the brake B-3 in accordance with those fed pressures; and a plunger 252 arranged coaxially with the spool 251 and adapted to be fed with the oil pressure of the brake B-2 in the valve closing direction (i.e., upward of the drawing), at the grip-change shifting time of applying the brake B-2 and releasing the brake B-3, and with the linear solenoid valve SLU signal pressure in the valve opening direction (i.e., downward of the drawing) at at least the aforementioned shift time. When the oil pressure of the brake B-2 is applied, the plunger 252 is brought into abutment against the spool 251 so that it interlocks the spool 251.

Of the 1-2 shift valve 21 and the 2-3 shift valve 22 constructing the aforementioned change-over means, moreover, the 2-3 shift valve 22 constitutes, in the present embodiment, a third valve, as specified so in the present invention, for switching the feed of the oil pressure to the first oil passage 201b and the second oil passage 202a at the shifting time between the 2nd gear stage (or 2nd) and the 3rd gear stage (or 3rd), and the 1-2 shift valve constitutes a fourth valve, as specified so in the present invention, which is to be retained in a predetermined position at the shifting time from the 2nd gear stage (or 2nd) to the third gear stage (or 3rd). The first oil passage 201b is connected to the 1-2 shift valve 21 while bypassing the 2-3 shift valve 22. As a result, the oil pressure for regulating the brake B-3 oil pressure is fed to the control valve 25 via the oil passage 201b through the 1-2 shift valve 21 which is not switched but retained in the predetermined position at the grip-change shifting time. Between the control valve 25 and the brake B-3, moreover, there is arranged the relay valve 26 which is controlled by the oil pressure from the brake B-2.

The connections between the aforementioned individual valves and oil passages will be described in detail in the following. A D-range oil passage 201 leading to a not-shown manual valve is branched through the 1-2 shift valve 21, and one branch oil passage 201a is connected through the 2-3 shift valve 22 to the relay valve 26 and further to a brake B-3 oil passage 203b. The other branch oil passage 201b leads through the 3-4 shift valve 23 and the B-2 release valve 24 to the in-port 254 of the B-3 control valve 25. from which the oil passage 201b is connected through an oil passage 203a to the relay valve 26.

The other D-range pressure oil passage 202 leading to the manual valve is branched through the 2-3 shift valve 22, and one branch oil passage 202a is connected through an orifice to a brake B-2 oil passage 204. This oil passage 204 is connected through the B-2 release valve 24 and a check valve to the oil passage 202a and through an orifice to the accumulator 27. The other branch oil passage 202b is connected through the 3-4 shift valve 23 to the clutch C-2.

The 3-4 shift valve 23 is so connected through a solenoid valve signal pressure oil passage 205 (as indicated by double-dotted lines in Fig. 1) to the B-2 release valve 24 as not only to provide and interrupt the communication between the two oil passages 201b and 202b but also to apply a solenoid valve SL3 signal pressure (P_{SL3}) to the spool end of the B-2 release valve 24.

The B-2 release valve 24 is formed with a bypass circuit for accelerating the drainage of the oil passage of the accumulator 27 at the release end of the brake B-2 and is equipped with a spring-loaded spool 241. The B-2 release valve 24 is fed at the end of the spool 241 with the signal pressure (P_{SL3}) of the solenoid valve SL3 by way of the 3-4 shift valve 23 so as to provide and interrupt the communication of a bypass oil passage 201d with the brake B-2 oil passage 204, to switch the communication of the D-range pressure oil passage 201b between the in-port 254 of the B-3 control valve 25 and a signal port at the end of a plunger 253, and to provide and interrupt the communication of an oil passage 201e branched from the other D-range pressure oil passage 201a with the oil passage 201b. As a result, the in-port 254 of the B-3 control valve 25 can be fed with a D-range pressure (P_{D}) from the two oil passages 201b and 201e through the 1-2 shift valve 21 in parallel with the 2-3 shift valve 22 and the 3-4 shift valve 23.

The B-3 control valve 25 is constructed such that the oil pressure of the oil passage 203a leading to an out-port 255 is regulated by controlling the in-port 254 with one and a drain port EX with the other of the two lands, which are formed on the spool 251, by a feedback pressure fed to the end of the spool 251 through a feedback signal pressure in-port 256. The construction is further made such that the plunger 252 arranged coaxially with the spool 251 is formed into a differential piston shape having such a stroke area as can be brought into and away from abutment against the spool 251 when its radially differential portion is fed with the linear solenoid signal pressure (P_{SLU}) and when its end face is fed with the brake B-2 pressure of an oil passage 204a leading to the oil passage 204 of the brake B-2 through the 2-3 shift valve 22. This B-3 control valve 25 is further equipped with the plunger 253 which is disposed at the opposite side of the plunger 252 for changing the spring load upon the spool 251, such that the D-range pressure (P_{D}) of the oil passage 201b can be applied to and released from the end face of the plunger 253 through the B-2 release valve 24.

The relay valve 26 is a spring-loaded spool type change-over valve, and the brake B-2 pressure of the oil passage 204 and a line pressure (P_{L}) are fed in opposite directions to the end of the spool at the spring-loaded side and to the other spool end, to switch the communications between the brake B-3 oil passage 203b and the oil passages 201a and 203a.

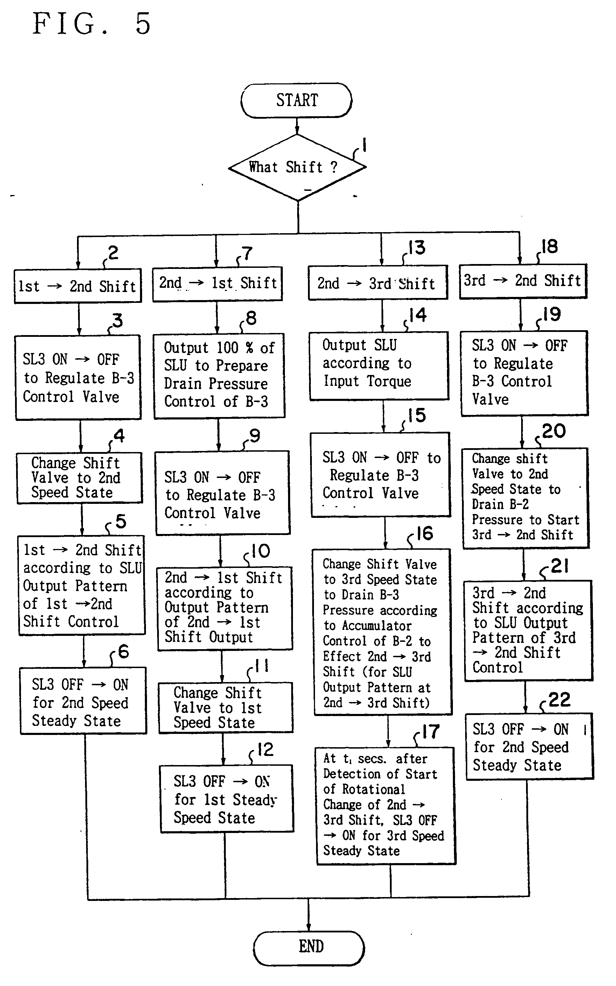

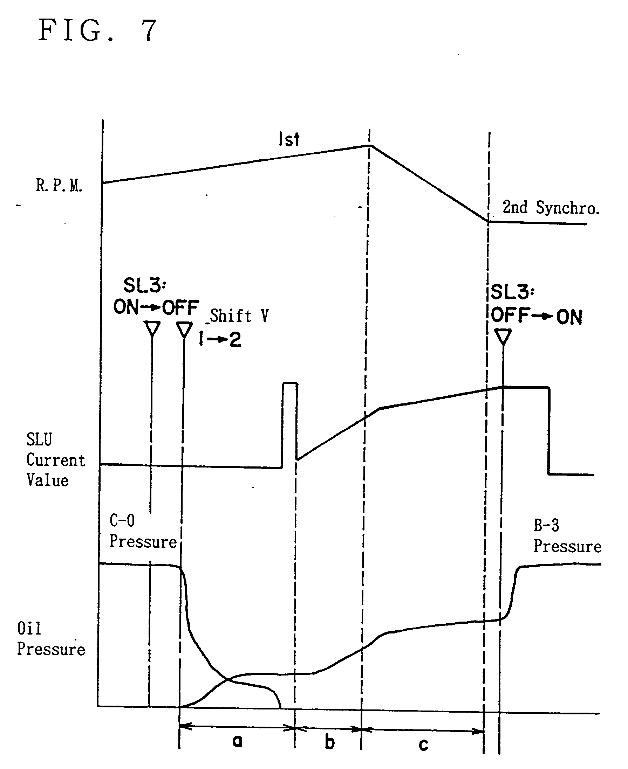

The operations-of the circuit thus constructed will be described in the following with reference to the flow chart of Fig. 5 and the time charts of Figs. 7 to 10.

### (1) 1st → 2nd Shift Control Operations

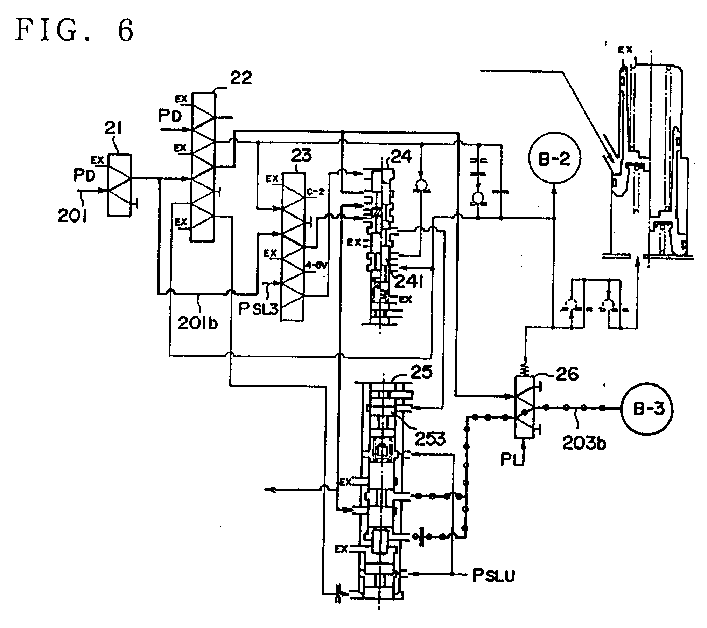

If the 1st → 2nd shift of Step 2 is decided at Step 1, the solenoid valve SL3 is switched from ON to OFF at Step 3 prior to the switching of the 1-2 shift valve 21, to bring the B-2 release valve 24 to a righthand half position, as shown in Fig. 6. At next Step 4, the 1-2 shift valve 21 is changed to a 2nd-speed state to feed the servo means through the relay valve 26 and the oil passage 203b with the D-range pressure (P_{D}). which comes through the (not-shown) manual valve, the oil passage 201, the 1-2 shift valve 21, the oil passage 201b, the 3-4 shift valve 23 and the B-2 release valve 24, as the brake B-3 pressure through the B-3 control valve 25, and to drain the clutch C-0 pressure. From now on, the brake B-3 pressure in sections a, b and c, as shown in Fig. 7, is directly controlled by the B-3 control valve 25 according to Step 5. Specifically, during the piston stroke (corresponding to the section a) of the servo means, the oil pressure level for the fast fill is set by the force of the return spring of the servo means. In the section b, the output (P_{SLU}) of the linear solenoid valve SLU is raised at a predetermined rate to change the rotation. In the section c, the linear solenoid valve SLU is subjected to a feedback control according to a target rotation change. At the end of the 1st → 2nd speed shift (i.e., in the 2nd synchronization), the solenoid valve signal pressure (P_{SL3}) is released at Step 6, when the solenoid valve SL3 is turned ON, to change the B-2 release valve 24 to a lefthand half position of Fig. 6 to apply the D-range pressure (P_{D}) through the B-2 release valve 24 to the plunger 253 of the B-3 control valve 25. On the other hand, the D-range pressure (P_{D}) through the B-2 release valve 24, as switched from another passage through the 2-3 shift valve 22, is continuously fed to the servo means through the B-3 control valve 25 to raise the brake B-3 pressure quickly to the line pressure (P_{L}) until the shift is ended. As a result, in the 2nd-speed (2nd) steady state, the B-3 control valve 25 has its plunger 253 pushed down by the line pressure (P_{L}) and its spool 251 locked in the lowermost position of the drawing. On the other hand, the spool 241 of the B-2 release valve 24 has been returned to the upper position of the drawing because the solenoid valve SL3 signal pressure (P_{SL3}) is released.

### (2) 2nd → 1st Shift Control Operations

Simultaneously with a shift decision of Step 7, the output of the linear solenoid valve SLU is increased to 100 % to prepare the drain control of the brake B-3 pressure. At next Step 9, the solenoid valve SL3 is switched from ON to OFF to bring the B-2 release valve 24 to the righthand half position of the drawing to release the B-3 control valve 25 from its locked state. From now on, the drainage of the brake B-3 pressure is directly controlled by the output of the linear solenoid valve SLU. After the 1st speed (1st) synchronization of Step 10, the 1-2 shift valve 21 is changed at Step 11 to its 1st-speed state to interrupt the feed of the brake B-3 pressure. Finally, the solenoid valve SL3 is switched at Step 12 from OFF to ON to switch the C-0 exhaust valve to start the feed of the clutch C-0 pressure.

### (3) 2nd → 3rd Shift Control Operations

Simultaneously with a shift decision of Step 13, the output of the linear solenoid valve SLU is increased to 100 % so that it is set to a value according to the input torque when the solenoid valve SL3 is switched from ON to OFF. Next, the solenoid valve SL3 is switched from ON to OFF to bring the B-2 release valve 24 to a righthand half position, as shown in Fig. 1, so that the application of the line pressure to the end of the plunger 253 is released through the B-2 release valve 24 to release the B-3 control valve 25 from its locked state. After this, the 2-3 shift valve 22 is switched to the 3rd-speed side to start the feed of the D-range pressure (P_{D}) through the 2-3 shift valve 22 to the servo means of the brake B-2 pressure. By the B-3 control valve 25, the brake B-3 pressure is regulated (as in the section a) to the necessary minimum according to the rise of the brake B-2 pressure. The inertia phase is subjected to the feedback control (as in the section b) by the back pressure control of the B-2 accumulator 27. In order to prevent the simultaneous locking, a timer control is made to turn ON the solenoid valve SL3 to interrupt the feed of the brake B-3 pressure and start the feed of the clutch C-0 pressure by the B-2 release valve 24. At the end of the accumulation of the B-2 accumulator 27, moreover, the relay valve 26 is switched to shut the brake B-3 oil passage, thus ending the shift.

### (4) 3rd-Speed (3rd) State

The D-range pressure (P_{D}) is applied not only to the end of the plunger 253 through the 1-2 shift valve 21, the 3-4 shift valve 23 and the B-2 release valve 24 but also to the end of the plunger 252 through the 2-3 shift valve 22, to move the two plungers 253 and 252 upward together with the spool 251 by the difference between their pressure receiving areas so that the three components are locked in the abutting state while compressing the spring.

### (5) 3rd → 2nd Shift Control Operations

Prior to the switching of the 2-3 shift valve 22, the solenoid valve SL3 is switched at Step 19 from ON to OFF to bring the B-2 release valve 24 to the righthand half position of Fig. 1 to release the B-3 control valve 25 from its locked state and to start the feed the brake B-3 pressure. At next Step 20, the 2-3 shift valve 22 is changed to the 2nd-speed state to start the small-orifice drainage of the brake B-2 pressure. By the fast fill of the brake B-3, the piston stroke is ended (as in the section a) prior to the 2nd-speed (2nd) synchronization. At Step 21, the rotation change is controlled (as in the section b) by the back pressure control of the B-2 accumulator. At a high-speed run, the brake B-3 pressure is on standby at a low level and elevated according to the synchronization. At a low-speed run, the brake B-2 pressure is held, and the synchronization is achieved by gradually controlling the brake B-3 pressure. After the 2nd-speed (2nd) synchronization, the solenoid valve SL3 is switched at Step 22 from OFF to ON to switch the B-2 release valve 24 to effect the quick drainage of the brake B-2 and the quick application of the brake B-3, this ending the shift.

### (6) N → 3rd Shift Control Operations

In this case, when the solenoid valve SL3 is ON, the signal pressure (P_{SL3}) is drained from the end of the spool 241 of the B-2 release valve 24 through the 3-4 shift valve 23 at the 3rd speed position and the solenoid valve signal pressure oil passage 205 so that the spool 241 of the B-2 release valve 24 takes the lefthand half position of the drawing. As a result, the feed itself of the D-range pressure (P_{D}) from the oil passage 201b to the B-3 control valve 25 is interrupted by said valve 24. As a result, it is possible to eliminate the unnecessary pressure regulating operations of the B-3 control valve 25, which are anticipated at the rising time of the applying pressure of the brake B-2 by both the D-range pressure (P_{D}) to be applied to the end of the plunger 253 through the 1-2 shift valve 21, the 3-4 shift valve 23 and the B-2 release valve 24 and the applying pressure of the brake B-2 to be applied as the signal pressure to the end of the plunger 252 through the 2-3 shift valve 22. Thus, it is possible to prevent the flow loss in advance.

In short, according to the control system of the embodiment thus far described, the force to stand against the oil pressure component, which is to be applied to the control valve 25 from the brake B-2 or the frictional engagement element to be applied at the grip-change shifting time, can be retained not by the external control signal pressure (P_{SLU}) itself but by increasing the receiving area of the signal pressure. As a result, that extension of the output width of the external control signal pressure (P_{SLU}), which might otherwise be caused by unifying the valve, can be eliminated to prevent deterioration of the accuracy. By the control of the relay valve 26 with the oil pressure coming from the brake B-2 or the second frictional engagement element, moreover, the oil pressure of the brake B-3 or the first frictional engagement element can be released independently of the action of the control valve 25. As a result, the oil pressure of the brake B-3 can be prevented from being confined, even in case the control valve 25 sticks in the closed stage.

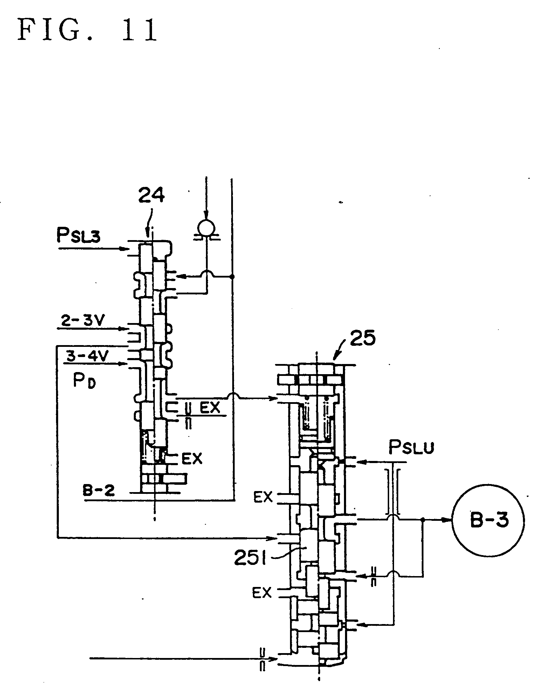

Although the present invention has been described in detail in connection with its embodiment, it should not be limited thereto but can have its specific construction modified in various manners within the scope of the definition made by Claims. For example, the method of applying the linear solenoid valve SLU pressure to the B-3 control valve 25 can be modified by circuit constructions of Figs. 11 to 13. Even if the constructions of these embodiments are taken, the interruption of the D-range pressure (P_{D}) through the 3-4 shift valve by the B-2 release valve 24 at the N → 3rd shifting time is effected like the case of the foregoing embodiment of Fig. 1 at the spool position of the B-2 release valve 24, as indicated at the lefthand half of the drawing, to obstruct the feed of the D-range pressure (P_{D}) to the B-3 control valve 25.

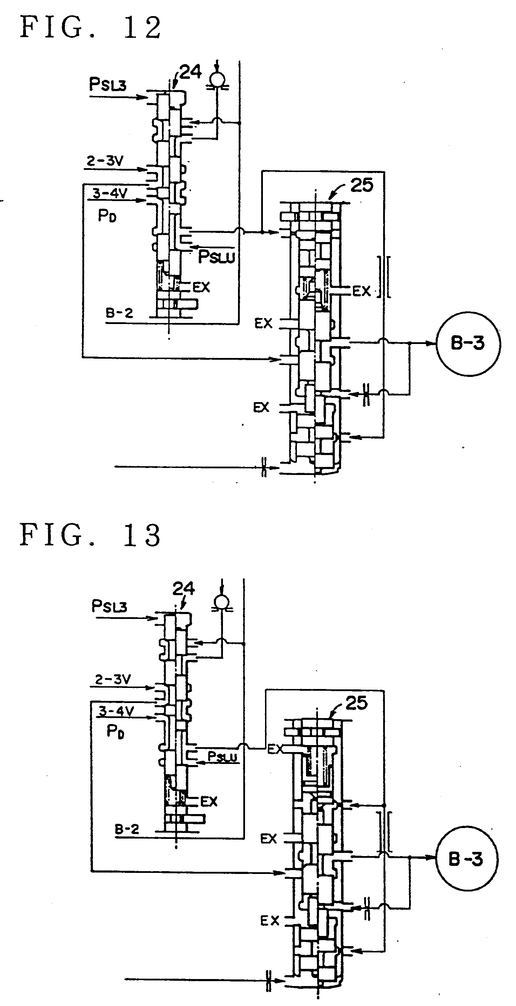

Fig. 11 shows an embodiment in which the circuit shown in Fig. 1 is arranged therein with the B-2 release valve 24 and the B-3 control valve, as slightly modified. Then, the linear solenoid valve SLU pressure (P_{SLU}) and the spring load are applied in parallel with the spool 251 (i.e., in the direction of addition) so that the pressure regulation has to be made with the low linear solenoid valve SLU pressure (P_{SLU}) to invite a disadvantage in the pressure regulating accuracy and responsiveness. In the embodiment of Fig. 12, on the contrary, those two forces are applied in series (i.e., in the opposing directions) so that the pressure regulation can be made under a higher linear solenoid valve SLU pressure (P_{SLU}) to provide an advantage in the pressure regulating accuracy and responsiveness. On the other hand, Fig. 12 presents an embodiment, in which the linear solenoid valve SLU pressure (P_{SLU}) is applied to the control valve 25 of the embodiment of Fig. 1 through the B-2 release valve 24. Fig. 13 presents an embodiment in which a similar construction is applied to the modified control valve 25.

Finally, in the foregoing embodiment, the feeding/releasing oil passage of the brake B-3 is arranged with the B-2 release valve 24, the B-3 control valve 25 and the relay valve 26 in the recited order. This order is intended to take an advantage of eliminating the flow loss by controlling the B-2 release valve 24 or the B-3 control valve 25 with the solenoid valve SL3, at the N → D shifting tide for a 3rd-speed state, to interrupt the feed of the pressure to the B-3 control valve 25, and an advantage of ensuring drainage of the brake B-3 pressure by the relay valve 26, even if the brake B-3 pressure is confined due to an intermediate failure of the B-3 control valve 25. Moreover, the embodiment is constructed such that the relay valve 26 is interposed in series between the B-3 control valve 25 and the brake B-3, as described above. At the time of a failure, when the relay valve 26 is locked in its drained state while the B-3 control valve 25 being in its fed state, there can be taken an advantage of eliminating the problem that the brake B-3 pressure is drained, while ensuring the drainage at the failure time between the B-3 control valve 25 and the brake B-3.

## Claims

1. A control system for an automatic transmission for establishing:
a first gear stage (1st) with both its first frictional engagement element (B-3) and second frictional engagement element (B-2) being released;
a second gear stage (2nd) with its first frictional engagement element being applied and its second frictional engagement element being released; and
a third gear stage (3rd) with its first frictional engagement element being released and its second frictional engagement element being applied,
said control system comprising:
a first oil passage (201b) for feeding an oil pressure to said first frictional engagement element (B-3);
a second oil passage (202a) for feeding an oil pressure to said second frictional engagement element (B-2);
change-over means (21-23) for feeding an oil pressure selectively to said first and second oil passages; and
a first valve (25) arranged in said first oil passage (201b) for regulating the oil pressure of said first oil passage in accordance with the applied state of said second frictional engagement element (B-2),
wherein the oil pressure is fed to said first oil passage and said second oil passage through said change-over means (21,22) at a shifting time from said first gear stage to said third gear stage, and wherein the release (203a) of the oil pressure from said first frictional engagement element (B-3) is regulated according to the feed of the oil pressure (204a) to said second frictional engagement element at a shifting time from said second gear stage to said third gear stage,
wherein said control system further comprises a second valve (24) arranged upstream of the oil passage of said first valve (25) for interrupting the feed of the oil pressure of said first oil passage to said first valve at the shifting time from said first gear stage to said third gear stage.

2. A control system for an automatic transmission according to claim 1,
wherein said change-over means (21-23) includes: a third valve (22) for switching the feed of the oil pressure from said first oil passage to said second oil passage at the shifting time from said second gear stage to said third gear stage; and a fourth valve (23) adapted to be held in a predetermined position at the shifting time from said second gear stage to said third gear stage, and
wherein said first oil passage is connected (201a) to said fourth valve while bypassing said third valve (22).

3. A control system for an automatic transmission according to claim 1, further comprising signal pressure generating means (P_{SL3}) for controlling said second valve,
wherein said signal pressure generating means switches said second valve (24) to a position for interrupting the feed of said oil pressure to said first valve (25), at the shifting time from said first gear stage to said third gear stage.

4. A control system for an automatic transmission according to claim 2 or 3, further comprising a fifth valve (26) interposed between said first valve (25) and said first frictional engagement element (B-3) for providing/interrupting the communication between said first frictional engagement element and said first oil passage, to allow said first frictional engagement element to communicate not with said first oil passage but with a drain oil passage at the shifting time from said second gear stage to said third gear stage in response to the oil pressure from said second frictional engagement element.

5. A control system for an automatic transmission according to claim 4,
wherein said fifth valve (26) is a change-over valve including: a valve member adapted to be fed with the oil pressure from said second frictional engagement element (B-2) in one direction and with a line pressure in the other direction; and a spring for biasing said valve member in the one direction, and
wherein said change-over valve is switched to such a position, when the oil pressure from said second frictional engagement element reaches said line pressure, as to allow said first frictional engagement element (B-3) to communicate not with said first oil passage but with said drain oil passage.

## Patentansprüche

1. Steuersystem in einem Automatikgetriebe zum Herstellen:
einer ersten Getriebestufe (1.), wobei sowohl ihr erstes Reibeingriffselement (B-3) als auch ihr zweites Reibeingriffselement (B-2) gelöst sind;
einer zweiten Getriebestufe (2.), wobei ihr erstes Reibeingriffselement betätigt und ihr zweites Reibeingriffselement gelöst ist; und
einer dritten Getriebestufe (3.), wobei ihr erstes Reibeingriffselement gelöst und ihr zweites Reibeingriffselement betätigt ist,
wobei das Steuersystem aufweist:
einen ersten Ölkanal (201b) zum Zuführen eines Öldrucks zum ersten Reibeingriffselement (B-3);
einen zweiten Ölkanal (202a) zum Zuführen eines Öldrucks zum zweiten Reibeingriffselement (B-2);
eine Umschalteinrichtung (21-23) zum selektiven Zuführen eines Öldrucks zum ersten und zweiten Ölkanal; und
ein im ersten Ölkanal (201b) angeordnetes erstes Ventil (25) zum Regulieren des Öldrucks des ersten Ölkanals in Übereinstimmung mit dem Betätigungszustand des zweiten Reibeingriffselements (B-2),
wobei der Öldruck zum ersten Ölkanal und zweiten Ölkanal über die Umschalteinrichtung (21, 22) beim Schalten aus der ersten Getriebestufe in die dritte Getriebestufe zugeführt und wobei das Ablassen (203a) des Öldrucks vom ersten Reibeingriffselement (B-3) entsprechend der Öldruckzufuhr (204a) zum zweiten Reibeingriffselement beim Schalten aus der zweiten Getriebestufe in die dritte Getriebestufe reguliert wird,
wobei das Steuersystem ferner aufweist: ein vor dem Ölkanal des ersten Ventils (25) angeordnetes zweites Ventil (24) zum Unterbrechen der Öldruckzufuhr des ersten Ölkanals zum ersten Ventil beim Schalten aus der ersten Getriebestufe in die dritte Getriebestufe.

2. Steuersystem für ein Automatikgetriebe nach Anspruch 1,
wobei die Umschalteinrichtung (21-23) aufweist: ein drittes Ventil (22) zum Umschalten der Öldruckzufuhr vom ersten Ölkanal zum zweiten Ölkanal beim Schalten aus der zweiten Getriebestufe in die dritte Getriebestufe; und ein viertes Ventil (23), das geeignet ist, in einer vorbestimmten Position beim Schalten aus der zweiten Getriebestufe in die dritte Getriebestufe gehalten zu werden, und
wobei der erste Ölkanal mit dem vierten Ventil unter Umgehung des dritten Ventils (22) verbunden ist (201a).

3. Steuersystem für ein Automatikgetriebe nach Anspruch 1, ferner mit einer Signaldruckerzeugungseinrichtung (P_{SL3}) zum Steuern des zweiten Ventils,
wobei die Signaldruckerzeugungseinrichtung das zweite Ventil (24) in eine Position zum Unterbrechen der Öl-druckzufuhr zum ersten Ventil (25) beim Schalten aus der ersten Getriebestufe in die dritte Getriebestufe umschaltet.

4. Steuersystem für ein Automatikgetriebe nach Anspruch 2 oder 3, ferner mit einem zwischen dem ersten Ventil (25) und dem ersten Reibeingriffselement (B-3) zwischengeschalteten fünften Ventil (26) zum Herstellen/Unterbrechen der Verbindung zwischen dem ersten Reibeingriffselement und dem ersten Ölkanal, damit das erste Reibeingriffselement nicht mit dem ersten Ölkanal, sondern mit einem Ablaßölkanal beim Schalten aus der zweiten Getriebestufe in die dritte Getriebestufe als Reaktion auf den Öldruck vom zweiten Reibeingriffselement kommunizieren kann.

5. Steuersystem für ein Automatikgetriebe nach Anspruch 4,
wobei das fünfte Ventil (26) ein Umschaltventil ist, das aufweist: ein Ventilteil, das geeignet ist, daß ihm der Öldruck vom zweiten Reibeingriffselement (B-2) in einer Richtung und ein Arbeitsdruck in der anderen Richtung zugeführt wird; und eine Feder zur Vorspannen des Ventilteils in die eine Richtung, und
wobei das Umschaltventil in eine solche Position umgeschaltet wird, wenn der Öldruck vom zweiten Reibeingriffselement den Arbeitsdruck erreicht, damit das erste Reibeingriffselement (B-3) nicht mit dem ersten Ölkanal, sondern mit dem Ablaßölkanal kommunizieren kann.

## Revendications

1. Système de commande pour transmission automatique pour établir :
une première gamme (1^{ère}), son premier élément d'entraînement par friction (B-3) ainsi que son deuxième élément d'entraînement par friction (B-2) étant relâchés;
une deuxième gamme (2^{e}), son premier élément d'entraînement par friction étant appliqué et son deuxième élément d'entraînement par friction étant relâché;
une troisième gamme (3^{e}), son premier élément d'entraînement par friction étant relâché et son deuxième élément d'entraînement par friction étant appliqué,
ledit système de commande comprenant:
un premier passage d'huile (201b) pour fournir une pression d'huile audit premier élément d'entraînement par friction (B-3);
un deuxième passage d'huile (202a) pour fournir une pression d'huile audit deuxième élément d'entraînement par friction (B-2);
des moyens de distribution (21-23) pour fournir une pression d'huile de manière sélective auxdits premier et deuxième passages d'huile; et
une première soupape (25) disposée dans ledit premier passage d'huile (201b) pour réguler la pression d'huile dudit premier passage d'huile en fonction de l'état appliqué dudit deuxième élément d'entraînement par friction (B-2);
dans lequel la pression d'huile est transmise audit premier passage d'huile et audit deuxième passage d'huile à travers lesdits moyens de distribution (21, 22) à un instant de changement de ladite première gamme à ladite troisième gamme, et dans lequel le relâchement (203a) de la pression d'huile dudit premier élément d'entraînement par friction (B-3) est régulé en fonction de la transmission de la pression d'huile (204a) audit deuxième élément d'entraînement par friction à un instant de changement de ladite deuxième gamme à ladite troisième gamme,
dans lequel ledit système de commande comprend en outre une deuxième soupape (24) disposée en amont du passage d'huile de ladite première soupape (25) pour interrompre la transmission de la pression d'huile dudit premier passage d'huile à ladite première soupape à l'instant de changement de ladite première gamme à ladite troisiéme gamme.

2. Système de commande pour transmission automatique selon la revendication 1,
dans lequel lesdits moyens de distribution (21-23) comportent : une troisième soupape (22) pour commuter la transmission de la pression d'huile dudit premier passage d'huile audit deuxième passage d'huile à l'instant de changement de ladite deuxième gamme à ladite troisième gamme; et une quatrième soupape (23) prévue pour être maintenue dans une position prédéterminée à l'instant de changement de ladite deuxième gamme à ladite troisième gamme, et
dans lequel ledit premier passage d'huile est connecté (201a) à ladite quatrième soupape tout en contournant ladite troisième soupape (22).

3. Système de commande pour transmission automatique selon la revendication 1, comprenant en outre un moyen de génération (PSL3) de pression de signal pour commander ladite deuxième soupape,
dans lequel ledit moyen de génération de pression de signal fait passer ladite deuxième soupape (24) à une position servant à interrompre la transmission de ladite pression d'huile à ladite première sou-pape (25), à l'instant de changement de ladite première gamme à ladite troisième gamme.

4. Système de commande pour transmission automatique selon la revendication 2 ou 3, comprenant en outre une cinquième soupape (26) interposée entre ladite première soupape (25) et ledit premier élément d'entraînement par friction (B-3) pour permettre/interrompre la communication entre ledit premier élément d'entraînement par friction et ledit premier passage d'huile, afin de permettre audit premier élément d'entraînement par friction de communiquer non pas avec ledit premier passage d'huile mais avec un passage de drainage d'huile à l'instant de changement de ladite deuxième gamme à ladite troisième gamme en fonction de la pression d'huile provenant dudit deuxième élément d'entraînement par friction.

5. Système de commande pour transmission automatique seion la revendication 4,
dans lequel ladite cinquième soupape (26) est une soupape de distribution comprenant un corps de soupape prévu pour recevoir la pression d'huile provenant dudit deuxième élément d'entraînement par friction (B-2) dans un sens et pour recevoir une pression de ligne dans l'autre sens; et un ressort pour pousser ledit corps de soupape dans le premier sens, et
dans lequel ladite soupape de distribution passe à une position qui, lorsque la pression d'huile provenant dudit deuxième élément d'entraînement par friction atteint ladite pression de ligne, permet audit premier élément d'entraînement par friction (B-3) de communiquer non pas avec ledit premier passage d'huile mais avec ledit passage de drainage d'huile.
